# FASCICULE DE BREVET EUROPEEN

(11) **EP 2 551 149 B1**
(45) Date de publication et mention de la délivrance du brevet: **25.09.2019**
(21) Numéro de dépôt: 11180478.7
(22) Date de dépôt: 07.09.2011
(51) Int. Cl.: B60M 3/02, H02G 7/20

(54) **Système d'alimentation destiné à former un circuit électrique d'alimentation d'un véhicule de traction, installation et ensemble ferroviaire comprenant un tel système d'alimentation**
Speisungssystem zum Bilden eines Versorgungsstromkreises für ein Zugfahrzeug, Installation und Eisenbahnzug, die ein solches Speisungssystem umfassen
Supply system intended for forming an electric circuit for powering a tractive unit, railway facility and unit including such a supply system

(30) Priorité: 25.07.2011 FR 1156743
(43) Date de publication de la demande: 30.01.2013
(73) Titulaire: Egis Rail, 69455 Lyon Cedex 06 (FR)
(72) Inventeur: Desseaux, Eric, 69100 Villeurbanne (FR); Perret, Jean-Paul, 17560 Bourcefranc le Chapus (FR)
(74) Mandataire: Derambure, Christian

(56) Documents cités:
- GB-A- 2 342 333
- GB-A- 2 343 431
- GB-A- 2 349 371
- SU-A1- 1 079 494
- SU-A1- 1 286 450
- SU-A1- 1 532 361
- SU-A1- 1 562 174
- SU-A2- 670 475

## Description

L'invention concerne, de façon générale, le domaine technique des systèmes d'alimentation en énergie électrique pour des véhicules de traction ferroviaire.

Plus précisément, l'invention se rapporte à un système d'alimentation spécialement destiné à former un circuit électrique d'alimentation capable d'alimenter un véhicule de traction ferroviaire pourvu d'un pantographe à partir d'un courant électrique alternatif. L'invention se rapporte également à une installation ferroviaire comprenant un système d'alimentation et une ou plusieurs voies ferroviaires ainsi qu'à un ensemble ferroviaire comprenant une installation ferroviaire et un ou plusieurs véhicule(s) de traction.

Dans le domaine technique des systèmes d'alimentation, il est connu de l'art antérieur différentes solutions visant à fournir des courants électriques suffisamment puissants pour alimenter de manière la plus performante possible des véhicules de traction ferroviaire quelque soit leurs positions vis-à-vis des sous-stations de traction électrique.

Pour répondre à cette problématique, il est connu de l'état de la technique des systèmes d'alimentation spécialement destinés à former un circuit électrique d'alimentation capable d'alimenter un véhicule de traction ferroviaire pourvu d'un pantographe à partir d'un courant électrique alternatif, et comportant un secteur d'alimentation comprenant, sur au moins une zone linéaire de distribution : un fil de contact apte à transporter le courant électrique alternatif et à transmettre ce courant électrique alternatif au véhicule de traction par frottement du pantographe sur le fil de contact ; un câble porteur positionné sensiblement à l'aplomb du fil de contact et supportant ledit fil de contact par l'intermédiaire d'une structure de pendulage ; une ligne d'alimentation négative présentant aussi une position décalée vis-à-vis du fil de contact, d'une part, et du câble porteur, d'autre part, et agencée dans le circuit électrique d'alimentation de manière à présenter un potentiel électrique en opposition de phase le potentiel électrique du fil de contact ; et éventuellement une ligne d'alimentation positive présentant également une position décalée vis-à-vis du câble porteur et agencé dans le circuit électrique d'alimentation de manière à présenter un potentiel électrique identique au potentiel électrique du fil de contact et du câble porteur.

Il convient de noter que les lignes d'alimentation sont qualifiées de « positive » et « négative » car leurs tensions respectives sont en opposition de phase l'une par rapport à l'autre et référencée par rapport au potentiel de la terre.

Un système d'alimentation selon la définition qu'en donne le préambule ci-dessus est connu de l'homme du métier par l'exemple qu'en donnent certaines réalisations de lignes ferroviaires utilisant la technologie - bien connue dans le domaine ferroviaire - du 2x25 kV standard et dans lesquelles certains secteurs d'alimentation présentent des zones linéaires de distribution - disposées à proximité des sous-stations de traction électrique - sur lesquelles est éventuellement formée une ligne d'alimentation positive supplémentaire, située à proximité du câble porteur afin de renforcer électriquement les zones alimentées par la sous-station de traction électrique.

Dans la technologie du 2x25 kV standard, l'alimentation est assurée par une sous-station de traction électrique dotée d'un transformateur branché, coté primaire, au réseau de transport d'électricité et, côté secondaire, à un ou plusieurs secteurs d'alimentation du réseau ferroviaire pour y délivrer une tension de 50 kilovolts. Une des bornes du secondaire alimente ainsi le fil de contact ainsi que le câble porteur tandis que l'autre borne du secondaire alimente la ligne d'alimentation négative, en opposition de phase par rapport au fil de contact, au câble porteur et à la ligne d'alimentation positive, lorsque cette dernière est présente. Le point milieu du secondaire du transformateur est, en outre, raccordé au rail et au conducteur de protection aérien de la voie ferroviaire.

Comme mentionné précédemment, dans la technologie du 2x25 kV à ligne d'alimentation positive supplémentaire, les systèmes d'alimentation comprennent, outre le fil de contact, le câble porteur, le conducteur aérien et la ligne d'alimentation négative, une ligne d'alimentation positive supplémentaire dont le potentiel électrique est identique à celui du fil de contact et du câble porteur, ce qui permet de supporter l'aspect thermique du courant électrique d'alimentation dans les conducteurs à proximité des sous-stations de traction.

Mais la technologie du 2x25 kV standard comme celle du 2x 25 kV à ligne d'alimentation positive supplémentaire présentent des inconvénients.

En effet, s'il est vrai que la technologie du 2x25 kV standard et à alimentation positive supplémentaire a permis d'améliorer sensiblement l'alimentation des véhicules de traction ferroviaires grâce à la réduction de l'impédance du fil de contact, les évolutions des réseaux ferroviaires et des réseaux de transport d'électricité soulèvent aujourd'hui des problématiques non résolues. Plus particulièrement, les gestionnaires des réseaux de transport d'électricité font face à des contraintes d'ordre économique et environnemental qui réduisent considérablement la possibilité de créer des ouvrages capables de fournir d'importantes puissances d'entrée aux réseaux ferroviaires. Parallèlement, les besoins en énergie de ces réseaux ferroviaires augmentent avec la nécessité de tracter des engins plus lourds dans le cadre de l'activité du FRET, d'augmenter l'accélération des trains de banlieue pour améliorer leur circulation, d'accroître la vitesse de pointe des trains à grande vitesse afin de réduire les durées de voyage, etc. Il découle de cette situation que les sous-stations de traction électrique ont tendance à être de plus en plus écartées de sorte que la technologie traditionnelle du 2x25 kV standard et à alimentation positive supplémentaire n'assure plus, dans certains cas, une qualité suffisante de tension au pantographe. En outre, dans le 2x25 kV à ligne d'alimentation positive supplémentaire, cette dernière n'assure qu'une compensation de la charge thermique sans impact important positif sur la qualité de l'alimentation lorsque les sous-stations de traction électrique sont éloignées.

Il est également connu de l'état de l'art de l'état de la technique d'autres systèmes complémentaires d'alimentation également basés sur le 2x25 kV standard.

Un premier exemple consiste à utiliser les condensateurs en série dans le circuit négatif électrique d'alimentation du réseau ferroviaire. Toutefois, l'exploitation de ces systèmes d'alimentation est limitée par une compensation non contrôlable des impédances mises en place sur le fil de contact.

Un autre exemple consiste à ajouter des installations complémentaires constituées d'un circuit capacitif contrôlable, connecté entre le fil de contact et les rails de la voie ferroviaire mais ces systèmes sont onéreux et fragiles.

L'état de la technique est en outre également décrite dans les documents GB 2343431, SU 1562174, SU 1532361, SU 1079494, SU 1286450, GB2349371, GB 2342333 et SU 670475. Dans ce contexte, la présente invention a pour but de proposer un système d'alimentation exempt de l'une au moins des limitations précédemment évoquées.

À cette fin, le système d'alimentation selon l'invention, par ailleurs conforme à la définition générique qu'en donne le préambule ci-dessus et présentant au moins un autotransformateur, se caractérise par le fait que la position de la ligne d'alimentation négative se trouve entre la position de la ligne d'alimentation positive, toujours présente, et la position d'une ligne géométrique médiane disposée entre le câble porteur et le fil de contact de manière à réduire l'impédance du circuit électrique d'alimentation.

Grâce à cet agencement particulier, la ligne d'alimentation positive permet d'agir sur les mutuelles électriques des lignes d'alimentation de phases contraires et ainsi de réduire l'impédance linéaire du circuit électrique d'alimentation. De ce fait, d'une part chaque sous-station peut avoir des secteurs d'alimentation plus longs et permettant dans le cas de sous-stations 2 x 25 kV contigües d'augmenter les distances séparant les dites sous-stations de traction électrique lors de l'installation de nouvelles lignes ce qui assure un gain significatif et, d'autre part, les tensions au pantographe peuvent être améliorées pour les lignes existantes ; ces avantages étant cumulatifs. Par ailleurs, il est possible de maintenir l'utilisation de technologies parfaitement connues comme celles des câbles nus et des isolateurs 25 kV, ce qui permet d'obtenir des réductions de coûts d'installation considérant l'ensemble des spécialités caténaire, sous station et raccordement aux réseaux de transport d'énergie - tant pour des lignes existantes à renforcer que pour des lignes nouvelles.

Selon une première réalisation, la position de la ligne d'alimentation négative est située à l'intérieur d'une ellipse géométrique présentant un grand axe ayant une première extrémité formée par la position de la ligne d'alimentation positive et une seconde extrémité formée par la position de la ligne géométrique médiane. Cet agencement permet en effet d'optimiser l'efficacité du système d'alimentation énergie électrique.

Dans ce cas, selon une réalisation, la position de la ligne d'alimentation positive, la position de la ligne d'alimentation négative et la position de la ligne géométrique médiane sont sensiblement dans un même plan géométrique horizontal, vertical ou oblique, ce qui assure une efficacité optimale.

Selon une seconde réalisation, la position de la ligne d'alimentation négative est située à l'extérieur d'une ellipse géométrique présentant un grand axe ayant une première extrémité formée par la position de la ligne d'alimentation positive et une seconde extrémité formée par la position de la ligne géométrique médiane. Cet agencement présente une efficacité réduite par rapport à la situation précédente mais répond, dans certaines circonstances, à des contraintes d'agencement des conducteurs (ponts, routes, tunnels, etc.).

Selon une réalisation, la position de la ligne d'alimentation positive et la position de la ligne d'alimentation négative sont sensiblement dans un même plan géométrique horizontal, la position de la ligne géométrique médiane étant décalée verticalement vis-à-vis du plan géométrique horizontal.

Selon une réalisation, la position de la ligne d'alimentation positive et la position de la ligne d'alimentation négative sont sensiblement dans un même plan géométrique vertical, la position de la ligne géométrique médiane étant décalée horizontalement vis-à-vis du plan géométrique vertical.

Selon une autre réalisation alternative, la position de la ligne d'alimentation positive et la position de la ligne d'alimentation négative sont sensiblement dans un même plan géométrique oblique se prolongeant au-dessus ou au-dessous de la position de la ligne géométrique médiane.

Selon une réalisation, la position de la ligne d'alimentation positive et la position de la ligne d'alimentation négative se trouvent, verticalement, au-dessus de la position d'un conducteur de protection aérien.

Selon une réalisation, la position de la ligne d'alimentation positive et la position de la ligne d'alimentation négative se trouvent, verticalement, au-dessus de la position du câble porteur.

L'invention se rapporte également, selon un deuxième aspect, à une installation ferroviaire comprenant un système d'alimentation tel que défini précédemment et une ou plusieurs voie(s) ferroviaire(s).

Selon une réalisation, le câble porteur et le fil de contact sont disposés au-dessus de la voie ferroviaire.

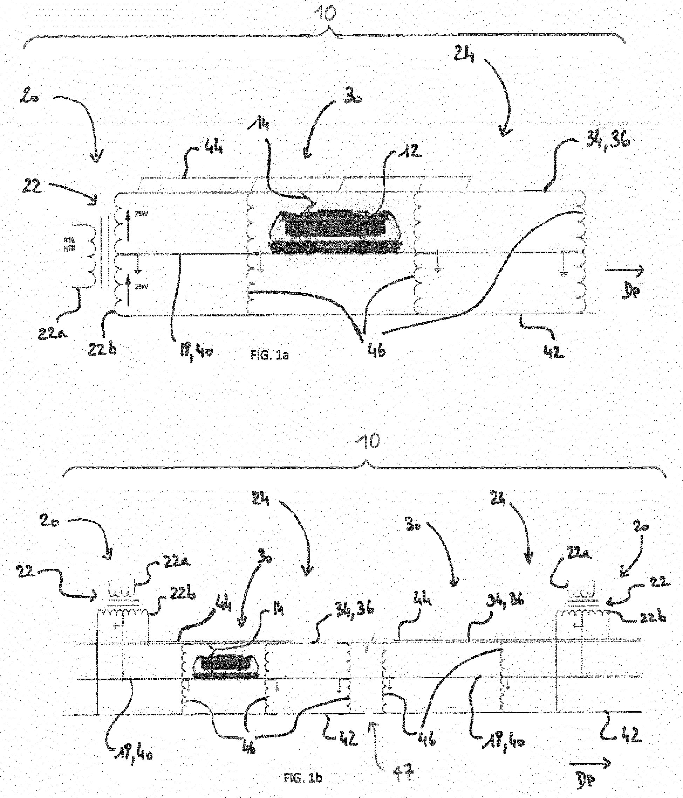

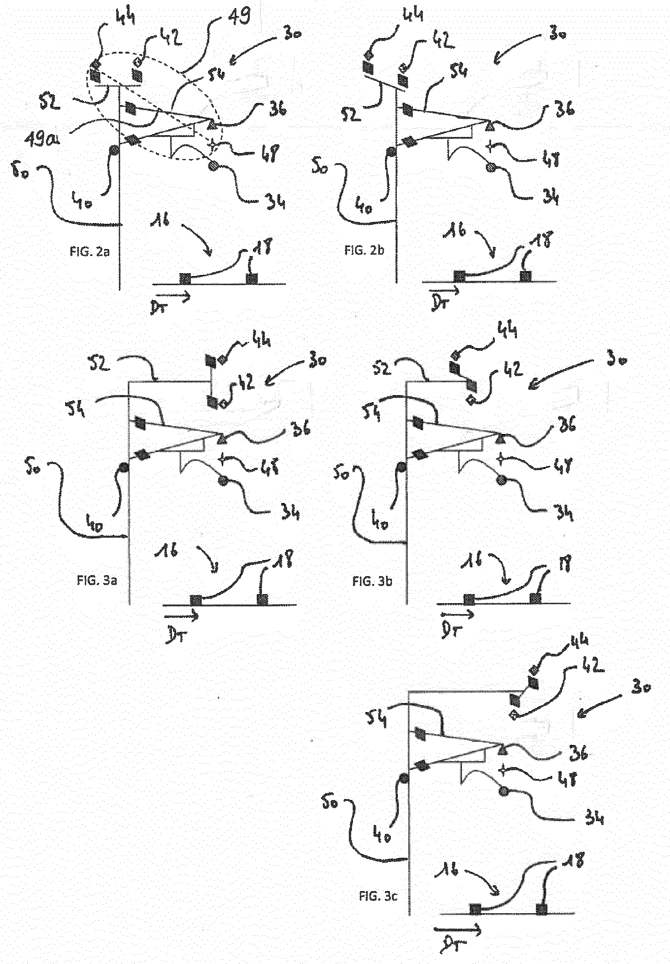

L'invention concerne en outre, selon un troisième aspect, un ensemble ferroviaire comprenant une installation ferroviaire tel que précédemment définie et au moins un véhicule de traction agencé de manière à pouvoir se déplacer le long de la voie ferroviaire et pourvu d'un pantographe apte à recevoir, par frottement contre le fil de contact, un courant électrique alternatif d'alimentation. D'autres caractéristiques et avantages de l'invention ressortiront clairement de la description qui en est faite ci-après, à titre indicatif et nullement limitatif, en référence aux dessins annexés, dans lesquels :
▪ La figure 1a est une représentation schématique d'un système d'alimentation selon l'invention comportant une sous-station de traction électrique et un secteur d'alimentation pourvu d'une zone de distribution linéaire dotée d'une ligne d'alimentation positive supplémentaire ;
▪ La figure 1b est une représentation schématique d'un système d'alimentation selon l'invention comportant deux sous-stations de traction électrique alimentant deux secteurs d'alimentation dans le prolongement l'un de l'autre et pourvus, chacun, d'une zone de distribution linéaire dotée d'une ligne d'alimentation positive supplémentaire ;
▪ Les figures 2a, et 2b sont des vues de détail, en représentation schématique et en coupe verticale, de deux modes de réalisation de zones linéaires de distribution appartenant à un système d'alimentation selon l'invention ;
▪ Les figures 3a à 3c sont des vues de détail, en représentation schématique et en coupe verticale, de trois autres modes de réalisation de zones linéaires de distribution appartenant à un système d'alimentation selon l'invention ;

Il convient, en premier lieu, de signaler que les termes « horizontal », « vertical », « oblique », voir « incliné » se rapportent aux caractéristiques du système d'alimentation en énergie électrique, de l'installation ferroviaire ou de l'ensemble ferroviaire selon l'invention lorsque ces derniers sont placés en position de fonctionnement.

Il convient aussi de souligner que le système d'alimentation 10 selon l'invention ne s'applique pas que dans le cadre d'une technologie de type 2x25 kV mais peut au contraire être mise en oeuvre avec toute autre tension et/ou toute autre fréquence d'alimentation, utilisant un schéma standard sous deux fois une tension nominale avec des postes à autotransformateurs. Il convient aussi de souligner que le système d'alimentation 10 selon l'invention peut également être mise en oeuvre avec un schéma déséquilibré tel que N kV, n fois N kV de tension d'alimentation avec n différent de 1, et N différent de 25kV, utilisant un schéma avec des postes à autotransformateurs. Ainsi, bien qu'il soit principalement question d'un schéma de type 2 x 25 kV dans la suite de la description, le système d'alimentation 10 selon l'invention pourrait, à titre exemplatif et nullement limitatif, également être employé avec un schéma de type 2 x 20 kV comme au Japon, ou un schéma déséquilibré de type 20 kV, 30 kV, etc.

Le système d'alimentation 10 selon l'invention vise à assurer l'approvisionnement en énergie électrique d'un ou plusieurs véhicule(s) de traction 12 muni d'un pantographe 14 ou analogue et capable de se déplacer le long d'une voie ferroviaire 16, constituée de rails 18. Pour recevoir cette énergie électrique, le pantographe 14 du véhicule de traction 12 permet, par frottement contre un fil de contact (décrit ultérieurement), d'utiliser l'énergie électrique nécessaire pour assurer son déplacement ainsi que celui d'une ou plusieurs voitures ou wagons tractés, à des vitesses acceptables selon l'application considérée.

Le système d'alimentation 10 peut ainsi être utilisé dans le cadre d'installations ferroviaires destinées au fonctionnement de lignes à grandes vitesses, de banlieue, de fret ferroviaire, etc.

Le système d'alimentation 10 selon l'invention est une amélioration de la technologie du 2x25 kV standard qui reprend les principes de bases de cette technologie et peut être mise en oeuvre dans tous ses schémas traditionnels, notamment avec un transformateur de puissance doté d'un point milieu comme dans le schéma français ou avec un transformateur de puissance sans point milieu mais avec autotransformateur dans les sous-stations de traction électrique comme dans le schéma connu en Asie.

Un mode de réalisation du système d'alimentation 10 illustré par la figure 1a est décrit en détail.

Conformément à la technologie du 2x25 kV standard, le système d'alimentation 10 selon l'invention vise à assurer l'approvisionnement du réseau ferroviaire en énergie électrique à partir du réseau de transport d'électricité. Pour ce faire, le système d'alimentation 10 comporte une pluralité de sous-stations de traction électrique 20 réparties le long du réseau ferroviaire.

Ces sous-stations de traction électrique 20 sont dotées de transformateurs 22 reliés, au primaire 22a, au réseau de transport d'énergie électrique et, au secondaire 22b, à un secteur d'alimentation 24 de manière à former un circuit électrique d'alimentation permettant de fournir l'énergie électrique nécessaire au fonctionnement du véhicule de traction 12. Le secteur d'alimentation 24 s'étend le long d'une voie ferroviaire 16, dans une direction de progression D_{P} coïncidant avec la direction de déplacement du véhicule de traction 12. Ce secteur d'alimentation 24 peut d'ailleurs s'étendre jusqu'à 40 kilomètres sur des lignes chargées et, grâce à l'invention, jusqu'à des distances comprises à plus de 60 km.

Le secteur d'alimentation 24 comporte, en premier lieu, un fil de contact 34.

Le fil de contact est apte à transporter un courant électrique alternatif permettant d'alimenter le véhicule de traction 12. Ce fil de contact 34 s'étend le long de la direction de progression D_{P} également et présente, selon une réalisation privilégiée, une phase sous potentiel de 25 kV.

Le secteur d'alimentation 24 comporte également un câble porteur 36.

Le câble porteur 36 est au potentiel du fil de contact 34, positionné sensiblement à l'aplomb du fil de contact 34 et supporte ledit fil de contact 34 par l'intermédiaire d'une structure de pendulage (non représentée sur les figures 1a et 1b). Il convient cependant de souligner que, selon d'autres réalisations, le système d'alimentation 10 selon l'invention peut également comprendre, en sus du câble porteur 36, un câble porteur auxiliaire (non représenté) permettant de faciliter et d'améliorer le maintien du fil de contact dans un plan horizontal.

Le secteur d'alimentation 24 comporte, par ailleurs, un conducteur de protection aérien 40.

Le conducteur de protection aérien 40 est agencé dans le circuit électrique d'alimentation de manière à assurer l'équipotentialité de l'ensemble des composants autres que le fil de contact 34, le câble porteur 34, la ligne d'alimentation négative (décrite ci-après) et la ligne d'alimentation positive (décrite ci-après) à la masse, à la terre et au retour traction. Plus particulièrement, ce conducteur de protection aérien 40 peut être relié électriquement aux rails 18 de la voie ferroviaire 16 et donc à la terre électrique de manière à former le point milieu du circuit électrique d'alimentation. Cette liaison peut, en outre, être régulièrement réitérée le long de la zone linéaire de distribution 30 afin de maintenir le potentiel du conducteur de protection aérien 40 égal à celui des rails 18 de la voie ferroviaire 16. D'autre part, selon une réalisation le conducteur de protection aérien 40 peut, également ou alternativement, être fixé sur des éléments de support (décrits ultérieurement)

Le secteur d'alimentation 24 comprend, par ailleurs, une ligne d'alimentation négative 42.

La ligne d'alimentation négative 42 est agencée dans le circuit électrique d'alimentation de manière à présenter un potentiel électrique en opposition de phase avec le potentiel électrique du fil de contact 34 et du câble porteur 36. Ainsi, le fil de contact 34 présente une tension de 50kV avec la ligne d'alimentation négative.

Selon l'invention, le secteur d'alimentation 24 présente au moins une zone linéaire de distribution 30, correspondant à une portion complète ou incomplète du secteur d'alimentation 24, sur laquelle est également agencée une ligne d'alimentation positive 44 supplémentaire.

Cette ligne d'alimentation positive 44 supplémentaire - qui n'apparaît que partiellement sur le secteur d'alimentation 24 de la réalisation de la figure 1a - est distincte du fil de contact 34, du câble porteur 36, du conducteur de protection aérien 40 et de la ligne d'alimentation négative 42, mais se trouve agencée dans le circuit électrique d'alimentation de manière à présenter un potentiel électrique identique au potentiel électrique du fil de contact 34 et du câble porteur 36.

Dès lors, lorsque le fil de contact 34 présente une phase sous potentiel de 25 kV, la ligne d'alimentation positive 44 - régulièrement reliée à une phase sous potentiel de 25 kV - se trouve en phase avec le potentiel du fil de contact 34 et du câble porteur 36.

Le secteur d'alimentation 24 comporte également des postes autotransformateurs 46.

Ces postes autotransformateurs relient le fil de contact 34, le câble porteur 36 et/ou la ligne d'alimentation positive 44, d'une part, à la ligne d'alimentation négative 42, d'autre part, de manière à distribuer régulièrement les tensions du fil de contact 34, du câble porteur 36 et/ou de la ligne d'alimentation positive 44, d'une part, et celle de la ligne d'alimentation négative 42. Ces autotransformateurs 46 sont généralement disposés tous les 6 à 15 km, le long du secteur d'alimentation 24. Il peut ainsi, par exemple, y avoir jusqu'à, 7 autotransformateurs 46 par secteur d'alimentation 24.

La figure 1b décrit un système d'alimentation 10 selon l'invention comprenant deux sous-stations de traction électrique 20.

La première sous-station de traction électrique 20 est associée à un premier secteur d'alimentation 24 dont la zone linéaire de distribution 30 pourvu de la ligne d'alimentation positive 44 supplémentaire n'est que partielle. La deuxième sous-station de traction électrique 20 est associée à un deuxième secteur d'alimentation 24 agencé dans la continuité du premier secteur d'alimentation 24 et dont la zone linéaire de distribution 30 pourvu de la ligne d'alimentation positive 44 supplémentaire s'étend sur toute la longueur du deuxième secteur d'alimentation 24. Les premier et deuxième secteurs d'alimentation 24 sont alors séparés par une section de séparation de phase 47.

Sont maintenant décrites, en référence aux figures 2a, 2b, 3a, 3b et 3c, les répartitions spatiales des éléments composants plusieurs modes de réalisation de zone linéaire de distribution 30 appartenant à un système d'alimentation 10 selon l'invention.

Tout d'abord, comme indiqué précédemment, le câble porteur 36 est positionné sensiblement à l'aplomb du fil de contact 34 et supporte ledit fil de contact 34 par l'intermédiaire d'une structure de pendulage.

Ensuite, le conducteur de protection aérien 40 présente une position décalée horizontalement et/ou verticalement vis-à-vis du fil de contact 34 et du câble porteur 36 afin de respecter les distances de sécurité électrique permettant d'assurer un isolement conforme aux normes en vigueur. À cet égard, le conducteur de protection aérien 40 peut présenter une position située au-dessus de la position du câble porteur 36, au niveau de la position du câble porteur 36, entre la position du câble porteur 36 et celle du fil de contact 34, au niveau de la position du fil de contact 34, ou encore au-dessous de la position de ce fil de contact 34.

De la même manière que pour le conducteur de protection aérien 40, la ligne de protection négative 42 présente, une position décalée vis-à-vis du fil de contact 34, d'une part, et du câble porteur 36, d'autre part. Cette ligne d'alimentation négative 42 peut présenter toute position horizontale et/ou verticale, à savoir au-dessus du câble porteur 36 ou bien décalé horizontalement vis-à-vis dudit câble porteur 36 de sorte à se trouver au niveau du câble porteur 36, entre le câble porteur 36 et le fil de contact, au niveau du fil de contact, ou en dessous du fil de contact. La position de cette ligne d'alimentation négative 42 peut également se trouver verticalement située au-dessus, au-dessous ou bien à la même position verticale que le câble de protection aérien 40.

La ligne d'alimentation positive 44 présente, elle-aussi, une position décalée vis-à-vis du fil de contact 34 et du câble porteur 36. Plus exactement et selon l'invention, la position de la ligne d'alimentation négative 42 se trouve entre la position de la ligne d'alimentation positive 44 et la position d'une ligne géométrique médiane 48 disposée entre le câble porteur 36 et le fil de contact 34 de manière à réduire l'impédance du circuit électrique d'alimentation. Cet agencement permet d'augmenter les mutuelles électriques entre la ligne d'alimentation négative 42, d'une part, et le fil de contact et la ligne d'alimentation positive 44, d'autre part, de sorte que l'impédance du circuit électrique d'alimentation est sensiblement diminuée.

De cette façon, il est possible d'alimenter, à partir d'une sous-station de traction électrique 20, des secteurs d'alimentation 24 plus allongés dans la direction de progression D_{P} tout en conservant une alimentation électrique de qualité, optimisée pour les véhicules de traction ferroviaire 12. Compte-tenu de l'allongement de ces secteurs d'alimentation, les sous-stations de traction électrique 20 peuvent être éloignées les unes des autres.

Selon une réalisation avantageuse, la position de la ligne d'alimentation négative 42 est située à l'intérieur d'une ellipse géométrique 49 présentant un grand axe 49a ayant une première extrémité formée par la position de la ligne d'alimentation positive 44 et une seconde extrémité formée par la position de la ligne géométrique médiane. L'effet de la ligne d'alimentation positive 44 sur l'impédance du circuit électrique est ainsi augmenté.

Selon d'autres réalisations plus avantageuses encore, la position de la ligne d'alimentation positive 44, la position de la ligne d'alimentation négative 42 et la position de la ligne géométrique médiane sont sensiblement dans un même plan géométrique horizontal, vertical ou oblique. Ces réalisations permettent d'optimiser les mutuelles électriques entre la ligne d'alimentation positive 44 et le fil de contact 34 et le câble porteur 36 et donc d'améliorer encore la qualité de l'alimentation tout en autorisant un écartement des sous-stations de traction électrique 20.

Toutefois, il convient de signaler que ces réalisations ne sont pas exclusives d'autres réalisations, dans lesquelles la ligne d'alimentation négative 42 est située à l'extérieur d'une ellipse géométrique 49 présentant un grand axe 49a ayant une première extrémité formée par la position de la ligne d'alimentation positive 44 et une seconde extrémité formée par la position de la ligne géométrique médiane. Ces réalisations sont, certes, moins performantes, mais elles permettent malgré tout d'obtenir une réduction de l'impédance du circuit électrique d'alimentation et peuvent s'avérer utiles lorsque l'agencement des conducteurs (fil de contact 32, câble porteur 36, ligne d'alimentation négative 42 et ligne d'alimentation positive 44) sont contraints par l'environnement extérieur.

Ainsi, la figure 2a illustre un premier mode de réalisation d'une zone linéaire de distribution 30 appartenant au secteur d'alimentation 24 d'un système d'alimentation 10 selon l'invention.

Selon cette réalisation, la position de la ligne d'alimentation positive 44 et la position de la ligne d'alimentation négative 42 sont sensiblement dans un même plan géométrique horizontal tandis que la position de la ligne géométrique médiane 48 est décalée verticalement vis-à-vis de ce plan géométrique horizontal. La position de la ligne d'alimentation négative 42 reste cependant à l'intérieur d'une ellipse géométrique 49 présentant un grand axe 49a dont la première extrémité est formée par la position de la ligne d'alimentation positive 44 et la seconde extrémité est formée par la position de la ligne géométrique médiane 48. Les effets sur l'impédance du circuit électrique d'alimentation sont ainsi optimisés.

Toutefois, selon une réalisation alternative, la position de la ligne d'alimentation négative 42 pourrait également être située à l'extérieur d'une telle ellipse géométrique 49 tout en maintenant un impact positif sur l'impédance du circuit électrique d'alimentation. Cette réalisation moins optimisée pourrait être utilisée sur une courte partie du secteur d'alimentation 24 afin de permettre le passage sous des ouvrages ferroviaires ; comme par exemple des ponts, routes ou tunnels.

La figure 2b illustre un deuxième mode de réalisation d'une zone linéaire de distribution 30 appartenant au secteur d'alimentation 24 d'un système d'alimentation 10 selon l'invention.

Selon cette réalisation, la position de la ligne d'alimentation positive 44 et la position de la ligne d'alimentation négative 42 sont sensiblement dans un même plan géométrique oblique ou incliné se prolongeant sensiblement vers la position de la ligne géométrique médiane 48. Ainsi, les positions de la ligne d'alimentation positive 44, de la ligne d'alimentation négative 42 et de la ligne géométrique médiane 48 appartiennent à un même plan géométrique oblique.

Plus particulièrement, en l'espèce la position de cette ligne d'alimentation positive 44 est située verticalement au-dessus de la position de la ligne d'alimentation négative 42, elle-même située au-dessus de la position de la ligne géométrique médiane 48.

Selon d'autres formes de réalisation non représentées, le plan géométrique oblique ou incliné formé par les positions de la ligne d'alimentation positive 44 et la ligne d'alimentation négative 42 pourrait se prolonger au-dessus ou au-dessous de la position de cette ligne géométrique médiane 48.

De la même façon, quelles que soient les positions relatives de ces lignes d'alimentation positive 44 et négative 42 dans la direction verticale, les lignes d'alimentation positive 44 et négative 42 peuvent présenter toute position verticale, à savoir au-dessus du câble porteur, au niveau du câble porteur, entre le câble porteur et le fil de contact, au niveau du fil de contact, ou en dessous du fil de contact. En outre, lesdites lignes d'alimentation positive 44 et négative 42 peuvent également être positionnées dans toute position verticale, à savoir au-dessus, au-dessous ou bien à la même position verticale que le câble de protection aérien.

La figure 3a représente un troisième mode de réalisation de l'invention.

Selon cette réalisation, la position de la ligne d'alimentation positive 44 et la position de la ligne d'alimentation négative 42 sont sensiblement dans un même plan géométrique vertical se prolongeant sensiblement vers la position de la ligne géométrique médiane 48. Ainsi, les positions de la ligne d'alimentation positive 44, de la ligne d'alimentation négative 42 et de la ligne géométrique médiane 48 appartiennent à un même plan géométrique vertical.

Plus particulièrement, en l'espèce la position de cette ligne d'alimentation négative 42 est située verticalement au-dessus et à l'aplomb de la position de la ligne d'alimentation positive 44, elle-même située au-dessus et à l'aplomb de la position de la ligne géométrique médiane 48.

Selon des réalisations alternatives, la position de la ligne d'alimentation positive 44 et la position de la ligne d'alimentation négative 42 pourraient aussi être sensiblement dans un même plan géométrique vertical et la position de la ligne géométrique médiane 48 légèrement décalée horizontalement vis-à-vis de ce plan géométrique vertical.

Les figures 3b et 3c représentent deux autres modes de réalisation de l'invention.

Selon ces réalisations, la position de la ligne d'alimentation positive 44 et la position de la ligne d'alimentation négative 42 sont sensiblement situées au-dessus de la ligne géométrique médiane 48, dans un même plan géométrique oblique - dans un sens ou dans l'autre - en se prolongeant sensiblement vers la position de la ligne géométrique médiane 48. Ainsi, les positions de la ligne d'alimentation positive 44, de la ligne d'alimentation négative 42 et de la ligne géométrique médiane 48 appartiennent à un même plan géométrique oblique.

Selon d'autres formes de réalisation non représentées, le plan géométrique oblique formé par les positions de la ligne d'alimentation positive 44 et la ligne d'alimentation négative 42 pourrait se prolonger au-dessus ou au-dessous de la position de cette ligne géométrique médiane 48.

Par ailleurs, dans la mesure où la zone linéaire de distribution 30 s'étend sur plusieurs kilomètres, cette dernière comporte une pluralité d'éléments de support 50 disposés environ tous les soixante mètres, montée verticalement et destiné(s) à supporter le fil de contact 34, le câble porteur 36, le conducteur de protection aérien 40, la ligne d'alimentation négative 42 et la ligne d'alimentation positive 44.

Ces éléments de support 50 sont agencés à proximité de la voie ferroviaire 16 et peuvent présenter une hauteur généralement et usuellement comprise entre 6 et 12 mètres.

Plus particulièrement, comme l'illustre les figures 2a à 3c, la ligne d'alimentation positive 44 et la ligne d'alimentation négative 42 sont fixées à demeure, directement ou indirectement, sur une extrémité supérieure 52 de l'élément de support 50 tandis que le conducteur de protection aérien 40 est agencé sur une zone médiane de l'élément de support 50. Par ailleurs, les lignes d'alimentation positive 44 et négative 42 sont supportées par l'élément de support 50 de manière à se trouver écartées l'une de l'autre, dans la direction transversale d'une distance comprise entre 0,5 et 2 mètres ou différentes selon les tensions d'alimentation.

L'élément de support 50 présente, en outre, un bras de support 54 s'étendant dans une direction transversale D_{T} sensiblement perpendiculaire à la direction longitudinale de progression Dₚ de la zone linéaire de distribution 30. Le bras de support 54 soutient le câble porteur 36 au-dessus de la voie ferroviaire 16, ce dernier supportant lui-même le fil de contact 34.

Ces éléments de support 50, bien connus de l'homme du métier, pourraient toutefois être remplacés par tout autre agencement permettant d'obtenir les distributions spatiales décrites précédemment.

Le système d'alimentation 10 obtenu, grâce à la réduction d'impédance qu'il assure, permet d'alimenter un système ferroviaire avec des secteurs d'alimentation 24 plus longs à partir d'une sous-station 20 et par le fait de pouvoir écarter les sous-stations de traction électrique 20 permettant d'alimenter le circuit électrique d'alimentation à partir du courant issu du réseau de transport d'électricité, d'une distance pouvant aller au-delà de 60 kilomètres dans la direction longitudinale de progression Dₚ de la zone linéaire de distribution 30 et ce même lorsque la ligne ferroviaire 16 s'avère chargée.

## Revendications

1. Système d'alimentation (10) spécialement destiné à former un circuit électrique d'alimentation capable, à partir d'un courant électrique alternatif, d'alimenter un véhicule de traction (12) ferroviaire pourvu d'un pantographe (14) pour son déplacement le long d'une voie ferroviaire (16), ledit système d'alimentation (10) comportant une ou une pluralité de sous-stations de traction électrique (20) réparties, chacune formant un secteur d'alimentation (24) comprenant sur au moins une zone linéaire de distribution (30)
▪ au moins un autotransformateur (46) ;
▪ un fil de contact (34) apte à transporter le courant électrique alternatif et à transmettre ce courant électrique alternatif au véhicule de traction (12) par frottement du pantographe (14) sur le fil de contact (34) ;
▪ un câble porteur (36);
▪ une ligne d'alimentation négative (42) présentant aussi une position décalée vis-à-vis du fil de contact (34), d'une part, et du câble porteur (36), d'autre part, et agencée dans le circuit électrique d'alimentation de manière à présenter un potentiel électrique en opposition de phase le potentiel électrique du fil de contact (34) ;
▪ une ligne d'alimentation positive (44) présentant également une position décalée vis-à-vis du câble porteur (36) et agencée dans le circuit électrique d'alimentation de manière à présenter un potentiel électrique identique au potentiel électrique du fil de contact (34) et du câble porteur (36) ;
**caractérisé en ce que** :
le câble porteur (36) est positionné sensiblement à l'aplomb du fil de contact (34) et supportant ledit fil de contact (34) par l'intermédiaire d'une structure de pendulage ; et
la position de la ligne d'alimentation négative (42) se trouve entre la position de la ligne d'alimentation positive (44) et la position d'une ligne géométrique médiane (48) disposée entre le câble porteur (36) et le fil de contact (34).

2. Système d'alimentation (10) selon la revendication 1, dans lequel la position de la ligne d'alimentation négative (42) est située à l'intérieur d'une ellipse géométrique (49) présentant un grand axe (49a) ayant une première extrémité formée par la position de la ligne d'alimentation positive (44) et une seconde extrémité formée par la position de la ligne géométrique médiane (48).

3. Système d'alimentation (10) selon la revendication 2, dans lequel la position de la ligne d'alimentation positive (44), la position de la ligne d'alimentation négative (42) et la position de la ligne géométrique médiane (48) sont sensiblement dans un même plan géométrique.

4. Système d'alimentation (10) selon la revendication 3, dans lequel le plan géométrique est horizontal, vertical ou oblique.

5. Système d'alimentation (10) selon l'une quelconque des revendications 1 et 2, dans lequel la position de la ligne d'alimentation positive (44) et la position de la ligne d'alimentation négative (42) sont sensiblement dans un même plan géométrique horizontal, la position de la ligne géométrique médiane (48) étant décalée verticalement vis-à-vis du plan géométrique horizontal.

6. Système d'alimentation (10) selon l'une quelconque des revendications 1 et 2, dans lequel la position de la ligne d'alimentation positive (44) et la position de la ligne d'alimentation négative (42) sont sensiblement dans un même plan géométrique vertical, la position de la ligne géométrique médiane (48) étant décalée horizontalement vis-à-vis du plan géométrique vertical.

7. Système d'alimentation (10) selon l'une quelconque des revendications 1 et 2, dans lequel la position de la ligne d'alimentation positive (44) et la position de la ligne d'alimentation négative (42) sont sensiblement dans un même plan géométrique oblique se prolongeant au-dessus ou au-dessous de la position de la ligne géométrique médiane.

8. Système d'alimentation (10) selon l'une quelconque des revendications 1 à 7, dans lequel la position de la ligne d'alimentation positive (44) et la position de la ligne d'alimentation négative (42) se trouvent, verticalement, au-dessus de la position du câble porteur (36).

9. Installation ferroviaire comprenant un système d'alimentation (10) selon l'une quelconque des revendications 1 à 8 et au moins une voie ferroviaire (16).

10. Ensemble ferroviaire comprenant une installation ferroviaire selon la revendication 9 et au moins un véhicule de traction (12) agencé de manière à pouvoir se déplacer le long de la voie ferroviaire (16) et pourvu d'un pantographe (14) apte à recevoir, par frottement contre le fil de contact (34), un courant électrique alternatif d'alimentation.

## Patentansprüche

1. Versorgungssystem (10), das speziell dazu ausgelegt ist, eine elektrische Versorgungsschaltung zu bilden, die dazu in der Lage ist, ausgehend von einem elektrischen Wechselstrom ein mit einem Stromabnehmer (14) versehenes Schienen-Triebfahrzeug (12) für seine Bewegung entlang einer Schienenstrecke (16) zu versorgen, wobei das Versorgungssystem (10) eine oder mehrere verteilte Elektroantrieb-Unterstationen (20) umfasst, die jeweils einen Versorgungssektor (24) bilden, der über mindestens eine lineare Verteilungszone (30) umfasst:
- mindestens einen Autotransformator (46);
- einen Kontaktdraht (34), der dazu geeignet ist, den elektrischen Wechselstrom zu transportieren und diesen elektrischen Wechselstrom durch Reibung des Stromabnehmers (14) an dem Kontaktdraht (34) auf das Triebfahrzeug (12) zu übertragen;
- ein Tragkabel (36);
- eine negative Versorgungsleitung (42), die eine versetzte Position in Bezug auf den Kontaktdraht (34) einerseits und auch auf das Tragkabel (36) andererseits aufweist und in der elektrischen Versorgungsschaltung so angeordnet ist, dass sie ein elektrisches Potential in Gegenphase zu dem elektrischen Potential des Kontaktdrahts (34) aufweist;
- eine positive Versorgungsleitung (44), die ebenfalls eine versetzte Position in Bezug auf das Tragkabel (36) aufweist und in der elektrischen Versorgungsschaltung so angeordnet ist, dass sie ein elektrisches Potential aufweist, das zu dem elektrischen Potential des Kontaktdrahts (34) und des Tragkabels (36) identisch ist;
**dadurch gekennzeichnet, dass:**
das Tragkabel (36) im Wesentlichen lotrecht zum Kontaktdraht (34) positioniert ist und den Kontaktdraht (34) vermittels einer Pendelstruktur stützt; und
die Position der negativen Versorgungsleitung (42) zwischen der Position der positiven Versorgungsleitung (44) und der Position einer geometrischen Mittellinie (48) liegt, die zwischen dem Tragkabel (36) und dem Kontaktdraht (34) angeordnet ist.

2. Versorgungssystem (10) nach Anspruch 1, wobei die Position der negativen Versorgungsleitung (42) innerhalb einer geometrischen Ellipse (49) angeordnet ist, die eine Hauptachse (49a) aufweist, mit einem ersten Ende, das durch die Position der positiven Versorgungsleitung (44) gebildet ist, und einem zweiten Ende, das durch die Position der geometrischen Mittellinie (48) gebildet ist.

3. Versorgungssystem (10) nach Anspruch 2, wobei die Position der positiven Versorgungsleitung (44), die Position der negativen Versorgungsleitung (42) und die Position der geometrischen Mittellinie (48) im Wesentlichen in einer gleichen geometrischen Ebene liegen.

4. Versorgungssystem (10) nach Anspruch 3, wobei die geometrische Ebene horizontal, vertikal oder schräg ist.

5. Versorgungssystem (10) nach einem der Ansprüche 1 und 2, wobei die Position der positiven Versorgungsleitung (44) und die Position der negativen Versorgungsleitung (42) im Wesentlichen in einer gleichen horizontalen geometrischen Ebene liegen, wobei die Position der geometrischen Mittellinie (48) vertikal gegenüber der horizontalen geometrischen Ebene versetzt ist.

6. Versorgungssystem (10) nach einem der Ansprüche 1 und 2, wobei die Position der positiven Versorgungsleitung (44) und die Position der negativen Versorgungsleitung (42) im Wesentlichen in einer gleichen vertikalen geometrischen Ebene liegen, wobei die Position der geometrischen Mittellinie (48) horizontal gegenüber der vertikalen geometrischen Ebene versetzt ist.

7. Versorgungssystem (10) nach einem der Ansprüche 1 und 2, wobei die Position der positiven Versorgungsleitung (44) und die Position der negativen Versorgungsleitung (42) im Wesentlichen in einer gleichen schrägen geometrischen Ebene liegen, die sich oberhalb oder unterhalb der Position der geometrischen Mittellinie erstreckt.

8. Versorgungssystem (10) nach einem der Ansprüche 1 bis 7, wobei die Position der positiven Versorgungsleitung (44) und die Position der negativen Versorgungsleitung (42) vertikal oberhalb der Position des Tragkabels (36) liegen.

9. Eisenbahnanlage mit einem Versorgungssystem (10) nach einem der Ansprüche 1 bis 8 und mindestens einer Schienenstrecke (16).

10. Eisenbahnanordnung, umfassend eine Eisenbahnanlage nach Anspruch 9 und mindestens ein Triebfahrzeug (12), das entlang der Schienenstrecke (16) beweglich angeordnet und mit einem Stromabnehmer (14) versehen ist, der dazu geeignet ist, durch Reibung am Kontaktdraht (34) einen elektrischen Wechselstrom zur Versorgung aufzunehmen.

## Claims

1. Power supply system (10) specially designed to form an electrical power supply circuit capable supplying power from an alternating electrical current to a railway locomotive (12) provided with a pantograph (14) to displace it along a railway track (16), said power supply system (10) comprising one or a plurality of distributed electrical traction substations (20), each forming a power supply sector (24) comprising at least one linear distribution zone (30):
▪ at least one autotransformer (46);
▪ a contact wire (34) designed to transport alternating electrical current and to transmit this alternating electrical current to the traction vehicle (12) by the pantograph (14) rubbing on the contact wire (34);
▪ a support cable (36);
▪ a negative power supply line (42) also presenting a position offset from the contact wire (34), on the one hand, and from the support cable (36), on the other hand, and arranged in the electrical power supply circuit so as to have an electrical potential in phase opposition to the electrical potential of the contact wire (34);
▪ a positive power supply line (44) also having a position offset from the support cable (36) and arranged in the electrical power supply circuit so as to have the same electrical potential as the electrical potential of the contact wire (34) and the support cable (36);
**characterised in that**:
the support cable (36) is positioned approximately vertically in line with the contact wire (34) and supporting said contact wire (34) through a dropper adjustment system; and
the position of the negative power supply line (42) is located between the position of the positive power supply line (44) and the position of a median geometric line (48) arranged between the support cable (36) and the contact wire (34).

2. Power supply system (10) according to claim 1, in which the position of the negative power supply line (42) is located inside a geometric ellipse (49) with a major axis (49a) having a first end formed by the position of the positive power supply line (44) and a second end formed by the position of the median geometric line (48).

3. Power supply system (10) according to claim 2, wherein the position of the positive power supply line (44), the position of the negative power supply line (42) and the position of the median geometric line (48) are practically in the same geometric plane.

4. Power supply system (10) according to claim 3, wherein the geometric plane is horizontal, vertical or oblique.

5. Power supply system (10) according to either claim 1 or 2, wherein the position of the positive power supply line (44) and the position of the negative power supply line (42) are approximately in the same horizontal plane, the position of the median geometric line (48) being vertically offset from the horizontal geometric plane.

6. Power supply system (10) according to either claim 1 or 2, wherein the position of the positive power supply line (44) and the position of the negative power supply line (42) are practically in the same vertical geometric plane, the position of the median geometric line (48) being offset horizontally relative to the vertical geometric plane.

7. Power supply system (10) according to either claim 1 or 2, wherein the position of the positive power supply line (44) and the position of the negative power supply line (42) are practically in the same oblique geometric plane extending above or below the position of the median geometric line.

8. Power supply system (10) according to any one of claims 1 to 7, wherein the position of the positive power supply line (44) and the position of the negative power supply line (42) are vertically above the position of the support cable (36).

9. Railway installation comprising a power supply system (10) according to any one of claims 1 to 8 and at least one railway track (16).

10. Railway assembly comprising a railway installation according to claim 9 and at least one traction vehicle (12) arranged so as to be able to move along the railway track (16) and provided with a pantograph (14) capable of collecting an alternating electrical power supply current by rubbing against the contact wire (34).
